# EUROPEAN PATENT SPECIFICATION

(11) **EP 4 342 303 B1**
(45) Date of publication and mention of the grant of the patent: **21.10.2026**
(21) Application number: 23198453.5
(22) Date of filing: 20.09.2023
(51) Int. Cl.: B26D 1/40, B26D 3/22, A23G 3/34, A23G 3/02, A23G 3/06, A23G 4/04, A23G 3/18, A23G 4/18

(54) **APPARATUS FOR MAKING CONFECTIONERY PRODUCTS**
VORRICHTUNG ZUR HERSTELLUNG VON SÜSSWAREN
APPAREIL POUR LA FABRICATION DE PRODUITS DE CONFISERIE

(30) Priority: 21.09.2022 IT 202200019308
(43) Date of publication of application: 27.03.2024
(73) Proprietor: Perfetti Van Melle S.p.A., 20045 Lainate (MI) (IT)
(72) Inventor: ROSA, Massimo, 20045 LAINATE (MI) (IT); FRANCO, Alessandro, 20045 LAINATE (MI) (IT); MONETA, Massimiliano, 20045 LAINATE (MI) (IT); FORMICOLA, Andrea, 20045 LAINATE (MI) (IT); SULEYMANOGLU, Evsen, 20145 MILANO (IT); TULLI, Alessio, 21040 ORIGGIO (VA) (IT); FUJIMOTO, Keiji, 20045 LAINATE (MI) (IT); DELEO, Maurizio, 20045 LAINATE (MI) (IT)
(74) Representative: Bianchetti & Minoja with Trevisan & Cuonzo IPS SRL

(56) References cited:
- EP-A2- 1 894 476
- BE-A- 642 030
- CN-U- 206 840 698
- GB-A- 2 201 883
- US-A1- 2016 021 909

## Description

The invention relates to an apparatus for making a confectionery product consisting of a chewing gum having polyhedral shape, to the method for the production of the confectionery product and to the confectionery product.

### STATE OF THE ART

Production lines for the production of chewing gum are known which provide for the formation of the same through the use of a technique known as "rolling and scoring" which consists in the use of a layer of rubbery material from which a series of single pieces are obtained following the passage of the aforesaid layer through a cutting station, as described for example in WO2015085159.

The cited document refers how, using such a production system according to the prior art, given the strong adhesiveness of the rubbery material, it is necessary to use considerable quantities of powder material (e.g. talc) to guarantee the detachment of the material from the cutting station and allow therefore the forming of the single pieces with a continuous flow, avoiding that the same remain adhered to the knives.

The use of such powder causes technical inefficiencies due to the need for continuous maintenance work on the line to ensure proper functioning thereof.

WO2015085159 proposes as alternative solutions those of proceeding to oil the knives present in the cutting station, usually in the form of rollers, or of obtaining the detachment of the single pieces from the knives by means of a continuous flow of compressed air.

EP 1 894 476 A2 discloses also an apparatus, a cutter and a relative method for making chewing gum pieces, particularly adapted for the production of gum pieces presenting a square or rectangular in plan shape.

The processes and systems described by the patents cited with reference to chewing gum can also be applied to other confectionery material, such as fondant, chewable or hard candy. The problems described in detail with reference to chewing gum can also be found in these materials. In fact, the use of release agents also in the processing of these confectionery products is known to persons skilled in the art. By way of example, oils, fats or powders such as talc or starch are used.

There remains the need to find further production solutions other than those listed above that allow considerable savings to be made in materials and energy applied to the production process, obtaining in any case the release of the single pieces and thus preserving the possibility of continuous production.

Moreover, particularly in the case of production of single pieces of regular or irregular polyhedral shape, for example cubic or rhomboidal, it is known that due to the relaxation of chewing gum, or of other confectionery material, after forming, the single pieces thus obtained tend to be subject to a deformation phenomenon and, in particular, expansions are produced which tend, in the long run, to make cubes and prisms take on a rounded/ovoid shape.

WO2009138208 and US 8124145 describe the making of single pieces in cubic form by citing the use of various production techniques, including the above-mentioned rolling & scoring, but they do not deal in any way either with the problem of detaching the single pieces from the knives or the problem of deformation/expansion of the single pieces once formed.

### DETAILED DESCRIPTION OF THE INVENTION

The present invention is defined by the appended claims. The Applicant, always in search of innovations aimed at offering the consumer quality products as well as aesthetically pleasing products, has further researched the possibility of using production systems similar to those known to produce confectionery products and in particular chewing gum without the use of large quantities of material adjuvant to the production process such as the described powders and oils and without the application of further energies/forces to the process, such as the aforementioned continuous flow of compressed air. Furthermore, the Applicant has sought to obtain the abovementioned result by also solving the problem of the deformation and expansion of the single pieces, thus eliminating the undesirable unsightliness of the product that is a concern to the consumer.

The above has been achieved by the invention with the features listed in the appended independent claim 1.

Preferred embodiments of the invention are disclosed in the dependent claims.

The apparatus for making confectionery products, such as fondants, hard candy, chewable candy and in particular chewing gum, according to the invention, comprises a unit of extrusion of a confectionery material, suitable for forming a sheet of confectionery material, at least one pair of opposing and counter-rotating rollers, suitable for reducing the thickness of said sheet of material and a cutting station comprising opposing and counter-rotating rollers, provided with knives for defining the shape of the products (1), characterised in that said cutting station comprises at least two cutting units (10, 20) arranged one after the other along the production line and each comprising at least one respective pair of opposing rollers (11a, 11c) and (21a, 21c) provided with knives (30), (40) oriented at an angle with respect to the direction of feeding of said sheet of confectionery material and oriented at 45° with respect to the axes of the respective rollers, so as to perform a 45° cut of the rubbery confectionery material with respect to the direction of feeding of said sheet of confectionery material, the opposing rollers of each pair being mirrored with respect to each other, and with respect to the corresponding rollers of the other pair.

Each cutting unit comprises at least one adjacent pair of counter-rotating rollers provided with oblique knives in such a way as to be specular one to the other and with respect to the corresponding rollers of the adjacent pair.

The method for the production of edible products (1), consists of passing a confectionery material through several pairs of opposing and counter-rotating rollers suitable for reducing its thickness, characterised in that said confectionery material of reduced thickness is passed through a cutting station of an apparatus according to any one of the claims from 1 to 3, for forming individual pieces (1) of chewing gum.

Another object of the present invention is an edible product (1), in particular a confectionery product selected from fondant, chewable candy, hard candy and chewing gum made using the apparatus according to any one of claims 1 to 3 and the method according to claim 4, wherein the angle formed by the two adjacent walls of this edible product (1) varies from 130° to 104°, said angle corresponding substantially to the angle at the base formed by each knifes (30, 40), as defined in claim 3.

### BRIEF DESCRIPTION OF THE DRAWINGS

The features of the invention will be made clear by the following description of an example embodiment thereof illustrated in the accompanying drawings, wherein:
Fig. 1 is a diagrammatic view of a cutting station used in a production process of confectionery products according to the prior art;
Fig. 2 is a diagrammatic view of a cutting station according to the present invention;
Fig. 3 shows a front view of a first cutting unit of the cutting station according to the invention;
Fig. 4 shows a second cutting unit placed downstream or upstream of the first cutting unit;
Fig. 5 is an axonometric view schematically showing two opposing rollers of the abovementioned cutting units, in particular those of the right side of Fig. 3 and those of the left side of Fig. 4;
Fig. 6 is a lateral profile view of one of the rollers of Fig. 5, for example the upper one;
Fig. 7 is a view from above of one of the rollers of Fig. 5;
Fig. 8 is an enlarged section taken along plane A-A of Fig. 7;
Fig. 9 is a drawing taken from a photo showing the sheet of material exiting the cutting station;
Fig. 10 is an enlarged plan view of a single confectionery product obtained with the apparatus according to the invention;
Fig. 11 is a section taken along plane B-B of Fig. 10.

### DESCRIPTION OF A PREFERRED EMBODIMENT

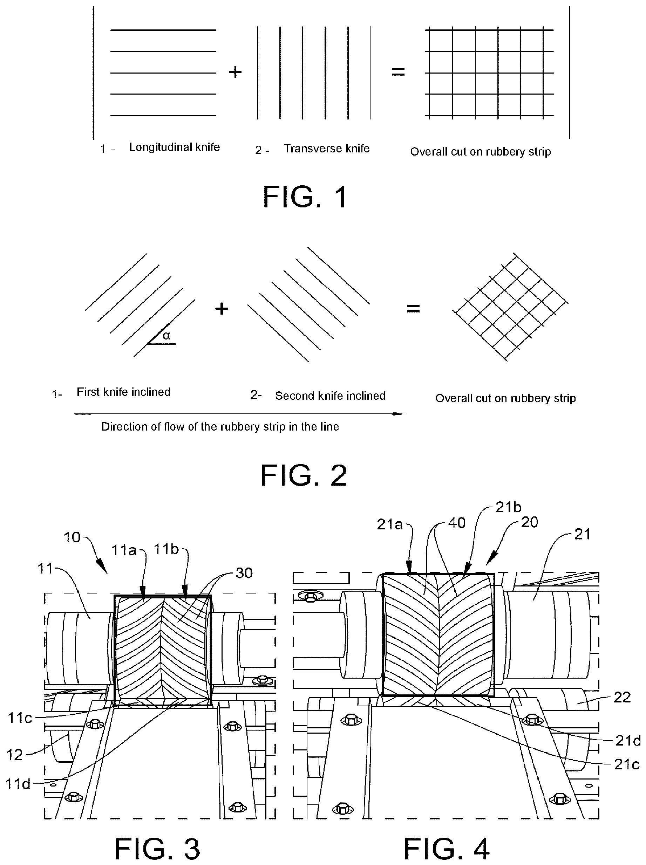

As shown in the diagram of Fig. 1, normally, the cutting station used in a rolling & scoring production process of confectionery products according to the prior art consists of at least two rollers, placed in succession along the production line, which respectively perform a longitudinal cut and a transverse or perpendicular cut with respect to the direction of flow of feeding of the confectionery material, preferably a rubbery material, in the cutting station, obtaining products of rectangular or square shape, which exit the cutting station with one side facing frontally. The diagram in Fig. 1 can be applied to all types of confectionery material, with fondant, hard candy, chewy candy or rubbery material being particularly preferred.

This cutting technique, as mentioned previously, has the disadvantage of the single pieces remaining attached to the knives in the case of making shapes with knife angles around ninety degrees with respect to the surface of the roller. Indeed, in this case, following the action of the knives, a vacuum effect is created that does not allow the single piece to detach from the knife. To overcome this disadvantage it is necessary to make a roller whose knives form an angle with the surface of the body of the roller of at least 140°.

However, the angle in question means that the expanding effect of the single pieces is further accentuated.

In order to overcome the aforementioned disadvantages, the Applicant has developed a cutting station, as shown in the diagram of Fig. 2, which consists of at least two consecutive rollers having knives oriented at an angle with respect to feeding of the confectionery material, in particular rubbery material, in the cutting station and opposite one to the other in terms of orientation. In this way rectangular, square or rhomboid-shaped products are obtained which exit the cutting station with a vertex facing frontally.

This result can be achieved with just two rollers, or better two pairs of opposing rollers, placed in succession one after the other, along the production line, with the knives having the above orientations. However, due to the pressure exerted perpendicularly with respect to the flow of the confectionery material and in particular of the rubbery material, there could be a lateral slipping of the material, which would require the application of other precautions in order to avoid such slipping and possible consequent phenomena of interruption of the continuous cycle processing.

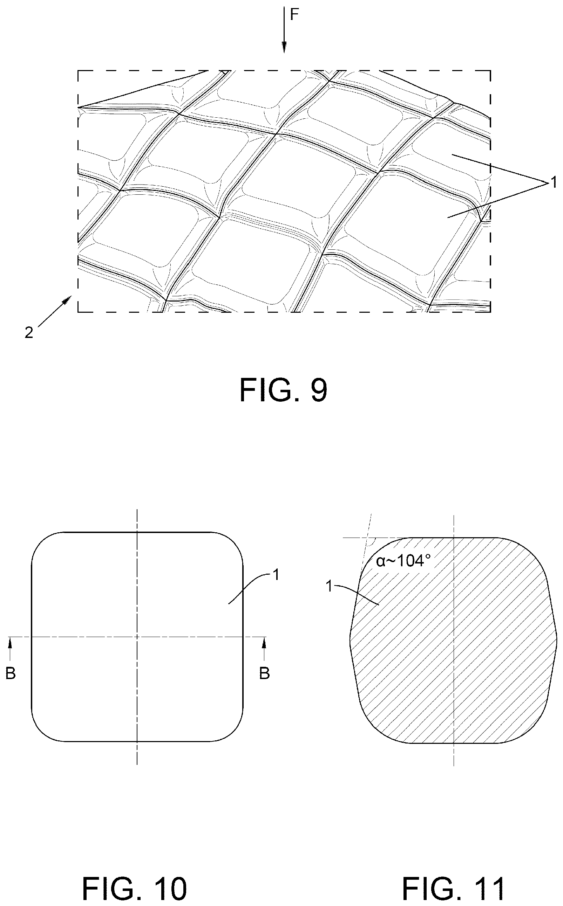

In order to avoid this, a preferred embodiment of the invention shown in Figures 3 to 8 is now described, for obtaining single pieces of edible products, in particular chewing gum, shown schematically in the plan and cross-sectional views of Figures 10 and 11, where they are denoted by reference numeral 1.

After extrusion, the confectionery material is first passed through several pairs of opposing and counter-rotating rollers in order to reduce the thickness thereof to bring it to the height of the product that is to be obtained, and finally reaches the cutting station according to the present invention, shown schematically in Figures 3 and 4, from which a sheet of material 2 (Fig. 9) bearing the single products 1 exits, which will subsequently be separated one from the other following cooling of the mass of material.

The cutting station comprises two cutting units, denoted respectively by reference numerals 10 and 20 in Figures 3 and 4, arranged indifferently in succession, one after the other, to one another along the production line.

The cutting unit 10 comprises two adjacent rollers 11a, 11b, mounted on a shaft 11 perpendicular to the direction of flow of the material, in such a way as to be specular, in the sense that the oblique knives (i.e. inclined with respect to the axis of the shaft 11, or with respect to the direction of feeding of the material) 30 with which they are provided are opposite one to the other or specular. The pair of adjacent rollers 11a, 11b are conveniently opposed to a corresponding specular pair of adjacent rollers 11c, 11d (not clearly visible in Fig. 3) mounted on a shaft 12 placed parallel and below the shaft 11. The arrangement of the rollers causes the knives 30 of the horizontally arranged adjacent pairs of rollers 11a, 11b and 11c, 11d and vertically arranged opposed pairs of rollers 11a, 11c and 11b, 11d to be specular to each other, i.e. they have opposing orientation, while the knives of the alternating, i.e. diagonally arranged, rollers on the shafts 11, 12, i.e. of the alternating pairs of rollers 11a, 11d and 11b, 11c have the same orientation.

In practice, rollers 11a, 11b, 11c, 11d are structurally identical one to the other, the orientation of the knives 30, the same or mirrored, being determined by the way in which these rollers are mounted on the respective shafts.

The second cutting unit 20, which comprises rollers 21a, 21b and 21c, 21d mounted on respective shafts 21 and 22, has exactly the same features as the first cutting unit 10, with respect to which it is specular, i.e. the orientation of the knives 40 of its rollers is reversed with respect to the orientation of the corresponding rollers of the cutting unit 10.

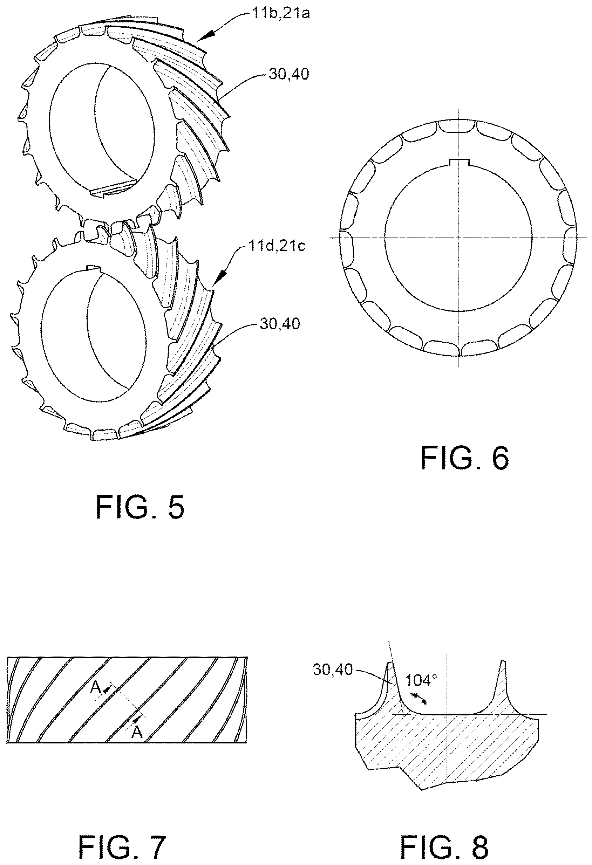

Fig. 5 is an axonometric view of a pair of opposing and counter-rotating rollers, for example 11b, 11d of the cutting unit 10 of Fig. 3 or 21a, 21c of the cutting unit 20 of Fig. 4, showing the orientation and coupling of the oblique knives, i.e. inclined as mentioned previously, 30 or 40 that perform the cutting of the material.

In a particularly preferred embodiment of the invention, the knives 30, 40 are oriented at 45° with respect to the axes of the respective rollers, so as to perform a 45° cut (angle α Fig. 2) of the confectionery material and in particular of the rubbery material with respect to the direction of feeding of said sheet of confectionery material.

The oblique orientation of the knives makes it possible to obtain the exit of the single piece from the cutting station edgewise, or vertex-wise, and not sidewise, as shown by arrow F in Fig. 9, thus facilitating the detachment of the single piece from the knives. In fact, in the case of a transverse knife according to the prior art, when it is detached from the edible material the entire front face of a confectionary product is detached at the same time, on the other hand, when an angled knife is detached from the confectionary product as in the present invention, the corner is detached and, considering that the corner has a smaller area than the front face, less force is required to detach it.

The edgewise exit of the single pieces, already in itself facilitating detachment from the knives, thus makes it possible to reduce the angle at the base formed by the latter with the surface of the body of the roller from the 140° of the conventional art down to 104° (see Fig. 8) without creating a vacuum effect which hinders the detachment of the single piece from the knives and bringing the benefit of reducing if not eliminating the expansion of the single pieces following their forming.

This effect can be seen in the cross section of a confectionery product 1 in Fig. 11, where the angle formed by two adjacent sides of the confectionery product, substantially corresponding to the angle at the base formed by each knife with the surface of the respective roller, is approximately 104°.

In a particular embodiment of the present invention, the nominal distance between the surfaces of two opposing rollers is equal to the distance between the crests of adjacent knives measured orthogonally to the crests, in which case the pieces produced by the present invention are similar to cubes (Fig. 10 and Fig. 11).

For example: with a nominal distance between the surfaces of two opposing rollers of 13.7 mm and approximately a similar distance between the crests of adjacent knives, the single pieces obtained would have nominal dimensions in height, width and depth of 13.7 mm and a nominal weight of 2.38 g (density 1.2 g/cm3, volume 1.987cm³).

Naturally, the invention is not limited to the particular embodiment described previously and illustrated in the accompanying drawings, but numerous detailed changes may be made thereto within the reach of the person skilled in the art without departing from the scope of the invention as defined by the claims appended to the present description.

## Claims

1. Apparatus designed for making confectionery products (1), comprising a unit of extrusion of a confectionery material, suitable for forming a sheet of confectionery material, at least one pair of opposing and counter-rotating rollers, suitable for reducing the thickness of said sheet of material and a cutting station comprising opposing and counter-rotating rollers, provided with knives for defining the shape of the products (1), **characterised in that** said cutting station comprises at least two cutting units (10, 20) arranged one after the other along the production line and each comprising at least one respective pair of opposing rollers (11a, 11c) and (21a, 21c) provided with knives (30), (40) oriented at an angle with respect to the direction of feeding of said sheet of confectionery material and oriented at 45° with respect to the axes of the respective rollers, so as to perform a 45° cut of the rubbery confectionery material with respect to the direction of feeding of said sheet of confectionery material, the opposing rollers of each pair being mirrored with respect to each other, and with respect to the corresponding rollers of the other pair.

2. Apparatus according to claim 1, **characterised in that** each cutting unit (10, 20) comprises at least one other adjacent pair of counter-rotating rollers (11b, 11d) and (21b, 21d) having knives oriented at 45° with respect to the axes of the respective rollers, so as to perform a 45° cut of the rubbery confectionery material with respect to the direction of feeding of said sheet of confectionery material, so as to be specular with respect to each other and with respect to the corresponding rollers of the adjacent pair.

3. Apparatus according to claims 1 and 2 in which the angle at the base formed by the knives (30, 40) with the surface of the corresponding roller measures from 130° to 104°.

4. Method for the production of edible products (1), consisting of passing a confectionery material through several pairs of opposing and counter-rotating rollers suitable for reducing its thickness, **characterised in that** said confectionery material of reduced thickness is passed through a cutting station of an apparatus according to any one of the claims from 1 to 3, for forming individual pieces (1) of chewing gum.

5. An edible product (1), in particular a confectionery product selected from fondant, chewable candy, hard candy and chewing gum made using the apparatus according to any one of claims 1 to 3 and the method according to claim 4, wherein the angle formed by the two adjacent walls of this edible product (1) varies from 130° to 104°, said angle corresponding substantially to the angle at the base formed by each knifes (30, 40), as defined in claim 3.

## Patentansprüche

1. Vorrichtung zur Herstellung von Süßwaren (1), umfassend eine Einheit zum Extrudieren von Süßwarenmaterial, die zur Bildung einer Folie aus Süßwarenmaterial geeignet ist, mindestens ein Paar gegenüberliegender und gegenläufig rotierender Walzen, die zur Verringerung der Dicke der genannten Folie geeignet sind, sowie eine Schneidestation, die gegenüberliegende und gegenläufig rotierende Walzen umfasst, die mit Messern bereitgestellt sind, um die Form der Produkte (1) zu definieren, **dadurch gekennzeichnet, dass** die Schneidestation mindestens zwei Schneideinheiten (10, 20) umfasst, die nacheinander entlang der Produktionslinie angeordnet sind und jeweils mindestens ein Paar gegenüberliegender Walzen (IIa, IIc) und (21a, 21c) umfassen, die mit Messern (30) bereitgestellt sind, (40), die in einem Winkel zur Zuführrichtung der genannten Folie für das Süßwarenmaterial und in einem Winkel von 45° zu den Achsen der jeweiligen Walzen ausgerichtet sind, um einen 45°-Schnitt des gummiartigen Süßwarenmaterials im Hinblick auf die Zuführrichtung der genannten Folie des Süßwarenmaterials durchzuführen, wobei die einander gegenüberliegenden Walzen jedes Paares spiegelbildlich zueinander und zu den entsprechenden Walzen des anderen Paares angeordnet sind.

2. Vorrichtung nach Anspruch 1, **dadurch gekennzeichnet, dass** jede Schneideinheit (10, 20) mindestens ein weiteres benachbartes Paar gegenläufiger Walzen umfasst (11b, 11d) und (21b, 21d) weisen eine Ausrichtung der Messer in einem Winkel von 45° zu den Achsen der jeweiligen Walzen auf, um einen 45°-Schnitt des gummiartigen Süßwarenmaterials im Hinblick auf die Zuführrichtung der genannten Folie durchzuführen, und zwar so, dass sie zueinander und zu den entsprechenden Walzen des benachbarten Paares spiegelbildlich angeordnet sind.

3. Vorrichtung nach Ansprüchen 1 und 2, bei der der von den Messern (30, 40) mit der Oberfläche der entsprechenden Walze gebildete Winkel an der Basis zwischen 130° und 104° beträgt.

4. Verfahren zur Herstellung von essbaren Produkten (1), bestehend aus dem Durchgehen eines Süßwarematerials durch mehrere Paare gegenüberliegender und gegenläufig rotierender Walzen, die zur Verringerung ihrer Dicke geeignet sind, **dadurch gekennzeichnet, dass** das Süßwarematerial mit verringerter Dicke durch eine Schneidestation einer Vorrichtung nach einem der Ansprüche 1 bis 3 durchgeht, um einzelne Kaugummistücke (1) zu bilden.

5. Essbares Produkt (1), insbesondere ein Süßwarenprodukt, ausgewählt aus Fondant, Kaubonbons, Hartbonbons und Kaugummi, das unter Verwendung der Vorrichtung nach einem der Ansprüche 1 bis 3 und des Verfahrens nach Anspruch 4 hergestellt wurde, wobei der Winkel, der durch die beiden benachbarten Wände dieses essbaren Produkts (1) gebildet wird, zwischen 130° und 104° variiert, wobei dieser Winkel im Wesentlichen dem Winkel an der Basis entspricht, der durch jedes der Messer (30, 40) gebildeten Winkel an der Basis, wie in Anspruch 3 definiert.

## Revendications

1. Appareil conçu pour la fabrication de produits de confiserie (1), comprenant une unité d'extrusion d'une matière de confiserie, appropriée pour la formation d'une feuille de matière de confiserie, au moins une paire de rouleaux opposés et contrarotatifs, appropriée pour la réduction de l'épaisseur de ladite feuille de matière et un poste de coupe comprenant des rouleaux opposés et contrarotatifs, munis de lames pour la définition de la forme des produits (1), **caractérisé en ce que** ledit poste de coupe comprend au moins deux unités de coupe (10, 20) agencées l'une après l'autre le long de la ligne de production et comprenant chacune au moins une paire respective de rouleaux opposés (11a, 11c) et (21a, 21c) munis de lames (30), (40) orientées selon un angle par rapport à la direction d'introduction de ladite feuille de matière de confiserie et orientées à 45° par rapport aux axes des rouleaux respectifs, de façon à réaliser une coupe à 45° de la matière de confiserie caoutchouteuse par rapport à la direction d'introduction de ladite feuille de matière de confiserie, les rouleaux opposés de chaque paire étant en miroir l'un par rapport à l'autre, et par rapport aux rouleaux correspondants de l'autre paire.

2. Appareil selon la revendication 1, **caractérisé en ce que** chaque unité de coupe (10, 20) comprend au moins une autre paire adjacente de rouleaux contrarotatifs (11b, 11d) et (21b, 21d) ayant des lames orientées à 45° par rapport aux axes des rouleaux respectifs, de façon à réaliser une coupe à 45° de la matière de confiserie caoutchouteuse par rapport à la direction d'introduction de ladite feuille de matière de confiserie, de façon à être spéculaires l'un par rapport à l'autre et par rapport aux rouleaux correspondants de la paire adjacente.

3. Appareil selon les revendications 1 et 2 dans lequel l'angle à la base formé par les lames (30, 40) avec la surface du rouleau correspondant mesure de 130° à 104°.

4. Procédé pour la production de produits comestibles (1) consistant à faire passer une matière de confiserie à travers plusieurs paires de rouleaux opposés et contrarotatifs appropriés pour la réduction de son épaisseur, **caractérisé en ce que** ladite matière de confiserie d'épaisseur réduite est passée à travers un poste de coupe d'un appareil selon l'une quelconque des revendications 1 à 3, pour la formation de morceaux individuels (1) de gomme à mâcher.

5. Produit comestible (1), en particulier produit de confiserie sélectionné parmi un fondant, un bonbon à mâcher, un bonbon dur et une gomme à mâcher, fabriqué à l'aide de l'appareil selon l'une quelconque des revendications 1 à 3 et du procédé selon la revendication 4, dans lequel l'angle formé par les deux parois adjacentes de ce produit comestible (1) varie de 130° à 104°, ledit angle correspondant sensiblement à l'angle à la base formé par chacune des lames (30, 40), tel que défini selon la revendication 3.
